# EUROPÄISCHE PATENTANMELDUNG

(11) **EP 2 048 885 A2**
(43) Veröffentlichungstag der Anmeldung: **15.04.2009**
(21) Anmeldenummer: 08014329.0
(22) Anmeldetag: 12.08.2008
(51) Int. Cl.: H04N 7/24

(54) **Videodaten-Verarbeitungsvorrichtung und Verfahren zum Bereitstellen eines digitalen Videodatenstroms**

(30) Priorität: 16.08.2007 DE 102007038861
(71) Anmelder: Micronas GmbH, 79108 Freiburg (DE)
(72) Erfinder: Platzer, Wilfried, 79100 Freiburg (DE)
(74) Vertreter: Patentanwälte Westphal, Mussgnug & Partner

(57) **Zusammenfassung**

Die Erfindung bezieht sich auf eine Videodaten-Verarbeitungsvorrichtung und ein Verfahren zum Bereitstellen eines digitalen Videodatenstroms. Die Videodaten-Verarbeitungsvorrichtung (TX; TX°) ist ausgestattet mit einem Eingang (I) zum Eingeben von zumindest digitalen Videodaten (vi), einer Verarbeitungseinrichtung (1) zum Verarbeiten zumindest der eingegebenen Videodaten (vi), einem Ausgang (O) zum Ausgeben der verarbeiteten Videodaten (vi) und einer Steuerschnittstelle (CIF) für Interrupt- und/oder Statusdaten (di, ds), wobei die Verarbeitungseinrichtung (1) und/oder eine Dateneinfügeeinrichtung (3) ausgebildet sind, in die eingegebenen digitalen Videodaten (vi) Interrupt- und/oder Statusdaten (di, ds) einzusetzen oder einzuarbeiten und der Ausgang (O) als digitalen Ausgangsdatenstrom (vo) die eingegebenen Videodaten (vi) mit den darin eingesetzten oder eingearbeiteten Interrupt- und/oder Statusdaten (di, ds) bereitstellt.

## Beschreibung

Die Erfindung bezieht sich auf eine Videodaten-Verarbeitungsvorrichtung bzw. auf ein Verfahren zum Bereitstellen eines Videodatenstroms, wobei zwischen zwei Einrichtungen zusätzlich zu Videodaten Interrupt- und/oder Statusdaten zu übertragen sind.

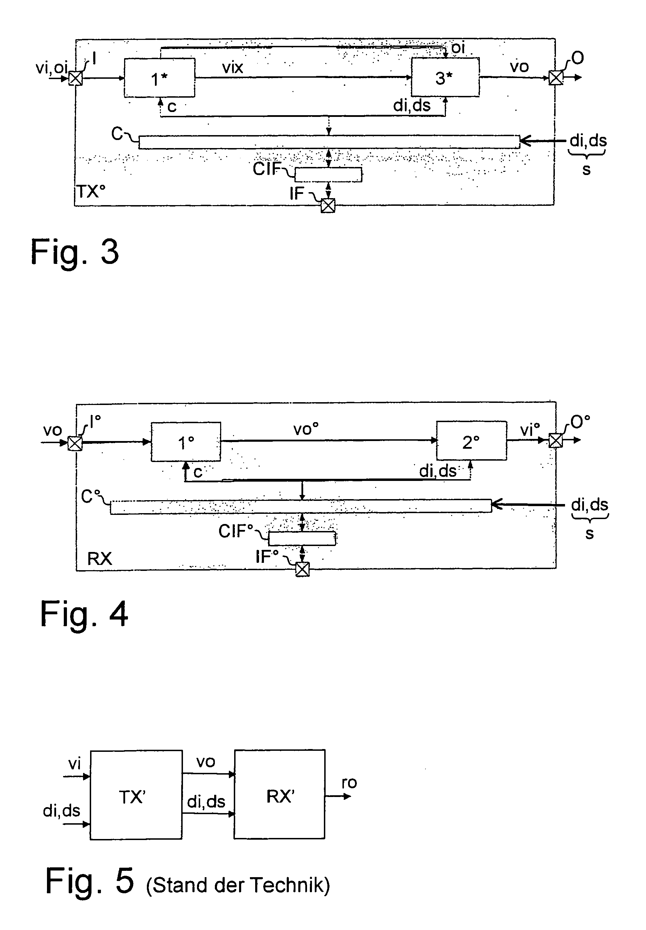

Wie dies anhand Fig. 5 beispielhaft für eine Anordnung gemäß dem Stand der Technik repräsentativ dargestellt ist, werden von einer ersten Videodaten-Verarbeitungsvorrichtung TX' in diese eingegebene Videodaten vi an einem Ausgang der Videodaten-Verarbeitungsvorrichtung TX' als ein digitaler Ausgangsdatenstrom vo bereitgestellt. Diese Videodaten im Ausgangsdatenstrom vo werden einem Receiver RX' zugeführt, welcher die empfangenen Videodaten weiterverarbeitet und gegebenenfalls als Receiver-Ausgangsdaten ro ausgibt. Zusätzlich zu den an einem Eingang der Videodaten-Verarbeitungsvorrichtung TX' eingegebenen Videodaten vi werden an einem anderen Eingang der Videodaten-Verarbeitungsvorrichtung TX' zusätzlich Interrupt- und/oder Statusdaten di, ds angelegt. Alternativ können solche Interrupt- und/oder Statusdaten di, ds auch in einer Verarbeitungseinrichtung der Videodaten-Verarbeitungsvorrichtung TX' bereitgestellt werden. Parallel zu den in der Videodaten-Verarbeitungsvorrichtung TX' verarbeiteten Videodaten vi werden über eine parallele Verbindung zusätzlich die Interrupt- und/oder Statusdaten di, ds an den Receiver RX' als zweiter Videodaten-Verarbeitungsvorrichtung übergeben. Der Receiver verarbeitet die von der Videodaten-Verarbeitungsvorrichtung TX' über deren Ausgangsdatenstrom vo empfangenen Videodaten abhängig von den zusätzlich über eine parallele Verbindung empfangenen Interrupt- und/oder Statusdaten di, ds.

Zur Übertragung zwischen zwei derartigen Videodaten-Verarbeitungsvorrichtungen sind neben der Verwendung separater Eingabe-/Ausgabe-Leitungen und Interrupt-Leitungen als alternativer Lösung das Abrufen solcher Informationen über einen seriellen Steuerbus bekannt, wie z. B. gemäß I²C, SPI oder Microwire. Während die erstgenannte Lösung als Nachteil beschränkte Ressourcen hat und komplizierte Leiterplatten-Layouts erforderlich macht, liegen Nachteile der zweiten Lösung einer beschränkten Bandbreite auf dem Steuerbus. Manchmal sind solche Busse hinter anderen Bussen geschaltet, wie z. B. bei USB, PCI oder Firewire, was das Problem noch vergrößert.

Die Aufgabe der Erfindung besteht darin, eine Videodaten-Verarbeitungsvorrichtung bzw. ein Verfahren zum Verarbeiten von Videodaten vorzuschlagen, welche eine einfache konstruktive Lösung bei zugleich effizienter Übertragung von Videodaten und zusätzlichen Daten wie den Interrupt-Daten oder Status-Informationen ermöglicht.

Diese Aufgabe wird gelöst durch eine Videodaten-Verarbeitungsvorrichtung mit den Merkmalen gemäß Patentanspruch 1 bzw. durch ein Verfahren zum Bereitstellen eines digitalen Videodatenstroms mit den Merkmalen gemäß Patentanspruch 8.

Vorteilhafte Ausgestaltungen sind Gegenstand abhängiger Ansprüche.

Bevorzugt wird demgemäß eine Videodaten-Verarbeitungsvorrichtung mit einem Eingang zum Eingeben von Videodaten, mit einer Verarbeitungseinrichtung zum Verarbeiten zumindest der eingegebenen Videodaten, mit einem Ausgang zum Ausgeben von verarbeiteten digitalen Videodaten und mit einer Steuerschnittstelle innerhalb der Verarbeitungseinrichtung für Leseaufforderungen des Videoempfängers. Dabei sind die Verarbeitungseinrichtung und/oder eine Dateneinfügeeinrichtung ausgebildet, in die Videodaten Interrupt- und/oder Statusdaten einzusetzen oder einzuarbeiten und der Ausgang stellt als digitalen Ausgangsdatenstrom die verarbeiteten, digitalen Videodaten mit den entsprechend einer erfolgten Leseaufforderung darin eingesetzten oder eingearbeiteten Interrupt- und/oder Statusdaten für den Videoempfänger bereit.

Die Verarbeitungseinrichtung und/oder die Dateneinfügeeinrichtung sind bevorzugt ausgebildet, die Interrupt- und/oder Statusdaten als eigenständige Daten zwischen die eigentlichen digitalen Videodaten einzusetzen oder einzuarbeiten.

Die Verarbeitungseinrichtung und/oder die Dateneinfügeeinrichtung sind bevorzugt ausgebildet, die Interrupt- und/oder Statusdaten als eigenständige Daten in für die eigentlichen digitalen Videodaten ungenutzte Datenstrombereiche einzusetzen oder einzuarbeiten. Die Verarbeitungseinrichtung und/oder die Dateneinfügeeinrichtung sind bevorzugt ausgebildet, die Interrupt- und/oder Statusdaten in einen Video-blanking-Bereich einzusetzen oder einzuarbeiten. Der Video-blanking-Bereich kann insbesondere ein Austastungsbereich oder eine Austastlücke sein.

Die Verarbeitungseinrichtung und/oder die Dateneinfügeeinrichtung sind bevorzugt ausgebildet, die Interrupt- und/oder Statusdaten in einem markierten Bereich des Ausgangsdatenstroms einzusetzen oder einzuarbeiten. Die Verarbeitungseinrichtung und/oder die Dateneinfügeeinrichtung können ausgebildet sein, die Interrupt- und/oder Statusdaten als solche und/oder deren Position in einem Kopfabschnitt des Ausgangsdatenstroms einzusetzen oder anzukündigen. Die Verarbeitungseinrichtung und/oder die Dateneinfügeeinrichtung sind bevorzugt ausgebildet, die Interrupt- und/oder Statusdaten in einem fest vorgegeben Bereich des Ausgangsdatenstroms einzusetzen oder einzuarbeiten.

Bevorzugt wird außerdem ein Verfahren zum Bereitstellen eines digitalen Videodatenstroms als ein Ausgangsdatenstrom, bei dem Interrupt- und/oder Statusdaten zusätzlich zu eingegebenen Videodaten an einem Ausgang nach Leseaufforderung durch einen Videoempfänger bereitgestellt werden, wobei die Interrupt- und/oder Statusdaten in die eingegebenen Videodaten eingesetzt oder eingearbeitet werden und wobei am Ausgang als Ausgangsdatenstrom die eingegebenen Videodaten mit den darin eingesetzten oder eingearbeiteten Interrupt- und/oder Statusdaten ausgegeben werden.

Die Interrupt- und/oder Statusdaten werden bevorzugt als eigenständige Daten zwischen die eigentlichen digitalen Videodaten eingesetzt oder eingearbeitet. Die Interrupt- und/oder Statusdaten werden bevorzugt als eigenständige Daten in für die eigentlichen digitalen Videodaten ungenutzte Datenstrombereiche eingesetzt oder eingearbeitet. Die Interrupt- und/oder Statusdaten können in einen Video-blanking-Bereich eingesetzt oder eingearbeitet werden. Die Interrupt- und/oder Statusdaten werden bevorzugt in einem markierten Bereich des Ausgangsdatenstroms eingesetzt oder eingearbeitet. Die Interrupt- und/oder Statusdaten können auch in einem Kopfabschnitt des Ausgangsdatenstroms eingesetzt oder angekündigt werden. Die Interrupt- und/oder Statusdaten können auch alternativ in einem fest vorgegeben Bereich des Ausgangsdatenstroms eingesetzt oder eingearbeitet werden.

Bevorzugt wird eigenständig außerdem als weiterer Bestandteil eines Videodaten-Verarbeitungssystems eine Videodaten-Verarbeitungsvorrichtung zum Empfangen eines Ausgangsdatenstroms einer solchen Vorrichtung bzw. eines solchen Verfahrens mit einem Eingang zum Eingeben der Videodaten mit den darin eingesetzten oder eingearbeiteten Interrupt- und/oder Statusdaten, einer Verarbeitungseinrichtung zum Trennen der Videodaten von den darin eingesetzten oder eingearbeiteten Interrupt- und/oder Statusdaten und einem Ausgang zum Ausgeben der verarbeiteten Videodaten oder der Verarbeitungseinrichtung oder einer weiteren Verarbeitungseinrichtung zum weiteren Verarbeiten der Videodaten.

Sowohl bei einer derartigen Vorrichtung als auch bei einem derartigen Verfahren können den Videodaten zusätzlich Audiodaten zugeordnet sein oder die Videodaten zusätzlich zu Bilddaten auch Audiodaten umfassen. Dabei kann es sich um fest zugeordnete Datenblöcke handeln, aber auch um getrennt voneinander zu verarbeitende Signale bzw. Datenfolgen.

Durch die Verwendung des in jedem Fall verwendeten digitalen Videobusses als einer Ausgangsleitung zur Übertragung des Ausgangsdatenstroms mit den Videodaten bzw. gegebenenfalls auch damit verbundenen Audiodaten für zusätzlich weitere Informationsdaten wie Status- und Interrupt-Nachrichten können eine oder mehrere separate Leitungen zur Übertragung derartiger Status- und Interruptdaten entfallen. Alternativ könnten solche Daten als zusätzliche Videodatenleitungen eingesetzt werden, um beispielsweise den Gesamtdurchsatz an Videodaten zu erhöhen. Besonders bevorzugt wird dabei das Einfügen der Zusatzdaten in Form der Status- und Interruptdaten in Bereiche des Datenstroms, in welchen keine aktiven Videodaten oder Audiodaten übertragen werden, das heißt insbesondere in so genannten Video-Blanking-Bereichen. Vorteilhaft sind auch Ausführungsformen, bei denen ein Kopfabschnitt, ein so genannter Header, das Vorliegen derartiger Informationen zeigt und/oder signalisiert. Zusätzlich oder alternativ kann auch vorgesehen werden, derartige Informationen an festgelegten Positionen innerhalb des Datenstroms einzufügen.

Zweckmäßigerweise wird eine empfängerseitige Videodaten-Verarbeitungsvorrichtung als ein Empfänger zum Empfangen eines derartigen Ausgangsdatenstroms entsprechend bereitgestellt, welche aus dem empfangenen Ausgangsdatenstrom die empfangenen Videodaten und gegebenenfalls Audiodaten von darin eingesetzten bzw. eingearbeiteten Interrupt- und/oder Statusdaten separieren kann.

Mögliche Anwendungsbereiche sind insbesondere das Einsetzen eines Macrovision-Status, eines Videodecoder-Status, eines Audiodecoder-Status, von RDS-Daten, einer Interrupt-Abfrage und/oder von generischen Nachrichten in den Datenstrom er Videodaten und/oder Audiodaten.

Ein Ausführungsbeispiel wird nachfolgend anhand der Zeichnung näher erläutert. Gleiche Bezugszeichen in den verschiedenen Figuren verweisen auf gleiche oder gleich wirkende Komponenten und Funktionen, wobei jeweils auf die Beschreibung zu den weiteren Figuren verwiesen wird. Bezugszeichen mit einem Zusatzsymbol kennzeichnen modifizierte Komponenten und Funktionen verschiedener Ausführungsformen. Es zeigen:
- Fig. 1: schematisch ein Blockdiagramm zur Veranschaulichung von Verfahrensabläufen einer beispielhaften Ausführungsform einer Videodaten-Verarbeitungsvorrichtung zum Einsetzen von Status- und Interruptdaten in einen Videodatenstrom,
- Fig. 2: schematisch eine erste beispielhafte Ausführungsform einer Videodaten-Verarbeitungsvorrichtung zum Einsetzen von Status- und Interruptdaten in einen Videoda-tenstrom,
- Fig. 3: eine zweite Ausführungsform einer derartigen Videodaten-Verarbeitungsvorrichtung;
- Fig. 4: eine empfängerseitige VideodatenVerarbeitungsvorrichtung zum Empfangen eines solchen Ausgangsdatenstroms mit Status- und Interruptdaten, welche in einen ansonsten Videodaten und gegebenenfalls Audiodaten enthaltenden Ausgangsdatenstrom eingebettet sind, und
- Fig. 5: schematisch eine Anordnung von zwei Videodaten-Verarbeitungsvorrichtungen gemäß dem Stand der Technik.

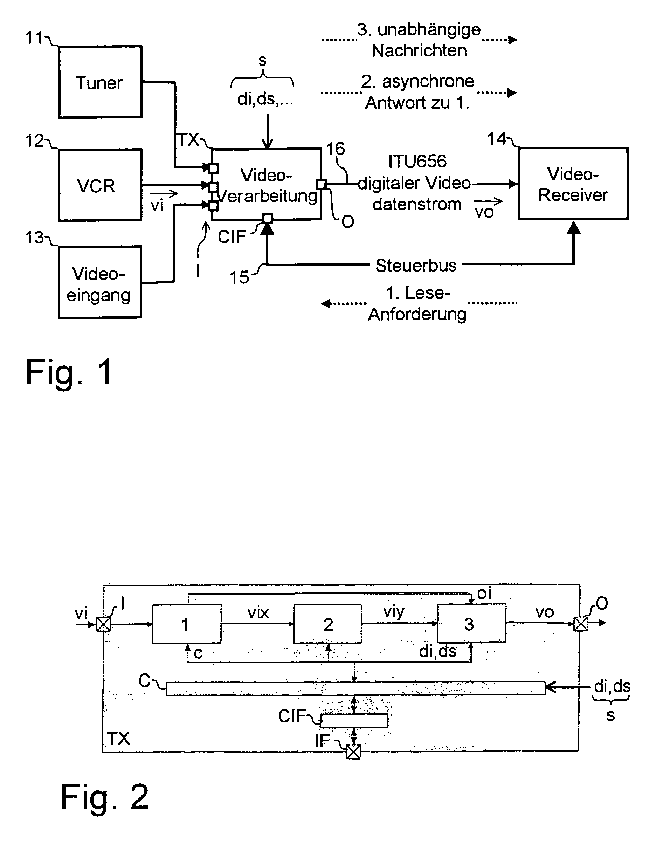

Fig. 1 zeigt eine Anordnung aus einer Videodaten-Verarbeitungsvorrichtung TX, an welcher eingangsseitig verschiedene Datenquellen 11 - 13 angeschlossen sind. Bei den Datenquellen 11 - 13 handelt es sich beispielhaft um einen Tuner, einen Videorecorder VCR und einen Videoeingang zum Anschließen eines weiteren Eingabegerätes. Ausgangsseitig ist an der Videodaten-Verarbeitungsvorrichtung TX über eine Datenleitung 16 für einen Datenstrom ein Empfänger 14 als beispielhafte Vorrichtung zum Aufbereiten und Wiedergeben von Video- und/oder Tondaten angeschlossen. Außerdem sind die Videodaten-Verarbeitungsvorrichtung TX und der Empfänger 14 über eine Steuerleitung 15, insbesondere einen Steuerbus zum Übertragen von Steueranweisungen oder Leseaufforderungen zwischen diesen verbunden. Der Empfänger 14 ist vorzugsweise ein Video-Receiver.

Die Videodaten-Verarbeitungsvorrichtung TX weist entsprechend einen Eingang I zum Eingeben von Videodaten, insbesondere digitalen Videodaten vi, eine integrierte eigentliche Verarbeitungseinrichtung 1 zum Verarbeiten zumindest der eingegebenen Videodaten vi, einen Ausgang O zum Ausgeben der verarbeiteten Videodaten auf die Datenleitung 16 und eine Steuerschnittstelle CIF für Leseaufforderungen des Videoreceivers 14 auf. Die Verarbeitungseinrichtung und/oder eine Dateneinfügeeinrichtung sind ausgebildet, in die eingegebenen Videodaten vi Interrupt-daten di und/oder Statusdaten ds (im Folgenden mit dem Bezugszeichen s benannt) einzusetzen oder einzuarbeiten. Der Ausgang O stellt die eingegebenen Videodaten vi mit den darin eingesetzten oder eingearbeiteten Interrupt- und/oder Statusdaten s als verarbeiteten Videodaten bzw. als digitalen Ausgangsdatenstrom vo bereit. Dabei werden die erforderlichen Interrupt- und/oder Statusdaten s nach den verwendeten Videostandards eingesetzt.

Der Ausgang O ist als digitaler unidirektionaler Ausgang ausgestaltet, welcher als Ausgangsdatenstrom vo insbesondere Videosignale transportiert. Der eigentliche Ausgangsdatenstrom vo, insbesondere Videodatenstrom gemäß ITU-R BT.656-4 (02/98), besteht aus Nutzdaten, insbesondere Video-Nutzdaten, und Blanking, d.h. Zeiten, in denen keine Nutzdaten anfallen. In den entsprechenden Zeiträumen des Blankings können andere Daten übertragen werden, wie z.B. Teletext oder Tondaten gemäß z.B. Rec.ITU-R BT.1364-1 (08/05).

Der Empfänger 14 dieses Ausgangsdatenstroms vo kontrolliert wiederum die Videodaten-Verarbeitungsvorrichtung TX über die Steuerleitung 15 in Form des Steuerbusses.

Der Steuerbus 15 ist üblicherweise sehr langsam und bremst bei Lese-Operationen, z.B. einer 1. Lese-Anforderung, heutige Prozessoren mit höheren Verarbeitungsgeschwindigkeiten als den Übertragungsgeschwindigkeiten des Steuerbusses stark aus. Während die Bus-Geschwindigkeiten derzeit im 100 kHz-Bereich liegen, liegen die Verarbeitungsgeschwindigkeiten der derzeitigen Prozessoren im Mega- und Giga-Herz-Bereich, so dass Antworten über den gleichen langsamen Steuerbus 15 zu langsam zurück kommen würden.

Durch das Verwenden eines asynchronen Modells wird das Problem beseitigt und es kann ein Steuerbus 15 zwischen der Videodaten-Verarbeitungsvorrichtung TX und dem Empfänger 14 von deren Ausgangsdatenstrom vo eingesetzt werden, wobei die Prozessoren der Videodaten-Verarbeitungsvorrichtung TX und des Empfängers 14 mit höheren Verarbeitungsgeschwindigkeiten ausgelegt sein können als die Übertragungsgeschwindigkeiten des Steuerbusses 15. Insbesondere kann das Verhältnis der Verarbeitungsgeschwindigkeiten zu den Übertragungsgeschwindigkeiten dabei problemlos einem Tausendfachen und mehr entsprechen.

Bei einem entsprechend umgesetzten asynchronen Modell wird das Lesen, d.h. in Fig. 1 die "1. Lese-Anforderung", wie ein Schreiben vorgenommen. Insbesondere beim Einsatz sogenannter posted writes als Schreibvorgängen kann dies ohne größere Bremswirkungen für den Prozessor oder die Prozessoren durchgeführt werden.

Eine Antwort, d.h. in Fig. 1 eine "2. asynchrone Antwort zu 1.", wird dann über die insbesondere ständige Verbindung des Videodatenstroms, d.h. des Ausgangsdatenstroms vo gesendet. Umsetzbar ist dabei, dass pro über die Steuerschnittstelle CIF empfangener Lese-Anforderung jeweils eine Antwort über den Ausgangsdatenstrom vo gesendet wird.

Optional kann durch ein wiederholtes Sendeverfahren die Antwort immer wieder über den Ausgangsdatenstrom vo an den Empfänger 14 gesendet werden, bis über die Steuerleitung und die Steuerschnittstelle CIF ein Signal oder Daten empfangen werden, welche eine Beendigung des wiederholten Sendens signalisieren und veranlassen. Dies erspart ein wiederholtes Senden bzw. Lese-Anfordern über die langsame Steuerleitung 15.

Vorteilhaft können auch zusätzliche Verbindungen zum Empfänger 14 entfallen, z.B. für sich bekannte Interrupt-Leitungen, wenn in den Ausgangsdatenstrom vo entsprechende Anweisungen als in Fig. 1 "3. unabhängige Nachrichten" eingesetzt werden, z.B. die Interrupts, welche sonst über eigene Interrupt-Leitungen übertragen werden würden.

Wie dies aus Fig. 2 ersichtlich ist, weist die beispielhafte Videodaten-Verarbeitungsvorrichtung TX einen Eingang I zum Eingeben von insbesondere digitalen Videodaten vi und gegebenenfalls auch digitalen Audiodaten zumindest einer der Datenquellen 11 - 13 sowie den Ausgang O zum Ausgeben der verarbeiteten Videodaten und gegebenenfalls Audiodaten in dem digitalen Ausgangsdatenstrom vo auf. Zwischen den Eingang I und den Ausgang O sind eine oder mehrere Komponenten zum Verarbeiten der eingegebenen Videodaten vi und gegebenenfalls auch Audiodaten geschaltet.

Außerdem weist die Videodaten-Verarbeitungsvorrichtung TX die Steuerschnittstelle CIF für die Leseaufforderung des Videoreceivers 14 auf. Bei der dargestellten Ausführungsform kommuniziert die Steuerschnittstelle CIF über eine bidirektionale Verbindung mit einer Steuereinrichtung C.

Die Steuereinrichtung C steht über insbesondere bidirektionale Leitungen oder Busse auch mit der oder den weiteren Verarbeitungseinrichtungen 1 in Verbindung. Die Steuereinrichtung C steuert die entsprechenden Verarbeitungseinrichtungen 1 derart, dass diese empfangene Videodaten vi und gegebenenfalls Audiodaten analysieren und/oder verarbeiten. Dazu kann die Steuereinrichtung C neben der Leseaufforderung auch Interrupt- und/oder Statusdaten di, ds an eine Dateneinfügeeinrichtung 3 auch Informations- und/oder Steuerdaten c aussenden und/oder empfangen.

Gemäß der beispielhaften ersten Ausführungsform werden die digitalen Videodaten vi in einer die digitalen Videodaten vi vom Eingang I empfangenden ersten Verarbeitungseinrichtung 1 vorverarbeitet und gegebenenfalls auf Datenstrukturen untersucht. Optional kann in den empfangenen Videodaten vi auch nach Datenstrombereichen gesucht werden, in welchen redundante Videodaten oder keine Videodaten vorliegen, um in solche Bereiche des Datenstroms anstelle der ursprünglichen Daten Interrupt- und/oder Statusdaten di, ds einsetzen zu können.

Von der Verarbeitungseinrichtung 1 werden gegebenenfalls vorverarbeitete Videodaten vix an eine Datenstrom-Codierungseinheit 2 ausgegeben, welche ebenfalls unter Steuerung der Steuereinrichtung C betrieben wird. Die Datenstrom-Codierungseinrichtung 2 stellt die eingangsseitigen, gegebenenfalls vorverarbeiteten Videodaten vix und gegebenenfalls Audiodaten als einen formatierten Datenstrom viy bereit, wobei dieser formatierte Datenstrom viy der Dateneinfügeeinrichtung 3 eingangsseitig angelegt wird. Die Dateneinfügeeinrichtung 3 fügt unter Steuerung der Steuereinrichtung C in entsprechende Datenstrombereiche Interruptdaten di und/oder Statusdaten ds ein. Optional können auch weitere Daten, beispielsweise Audiodaten oi oder sonstige Informationsdaten über einen optionalen weiteren Datenpfad direkt von der ersten Verarbeitungseinrichtung 1 an einen weiteren Eingang der Dateneinfügeeinrichtung 3 angelegt und zum Steuern oder Einfügen verwendet werden.

Die Dateneinfügeeinrichtung 3 modifiziert den empfangenen formatierten Datenstrom viy derart, dass der ausgegebene Ausgangsdatenstrom vo mit Videodaten, gegebenenfalls Audiodaten und zusätzlich den eingefügten Interrupt- und/oder Statusdaten di, ds an dem Ausgang O bereitgestellt wird.

Fig. 3 zeigt eine modifizierte Videodaten-Verarbeitungsvorrichtung TX°, welche sich gegenüber der ersten Ausführungsform dadurch unterscheidet, dass die Datenstrom-Codierungseinrichtung 2 entfällt und die eingangsseitig empfangenen digitalen Videodaten vi und Audiodaten oi von einer eingangsseitigen Verarbeitungseinrichtung 1* als modifizierte bzw. verarbeitete Videodaten vix und gegebenenfalls Audiodaten oi direkt an eine ausgangsseitige Dateneinfügeeinrichtung 3* angelegt werden. Die übrigen Komponenten und Funktionen entsprechen denen der ersten beispielhaften Ausführungsform gemäß Fig. 2.

Optional kann eine weitere Zusammenfassung derart erfolgen, dass eine einzige Verarbeitungskomponente empfängerseitige Videodaten vi und/oder Audiodaten oi direkt zu dem Ausgangsdatenstrom vo modifiziert, in dem bereits diese eine Verarbeitungseinrichtung selber die entsprechenden zusätzlichen Daten, insbesondere Interrupt- und/oder Statusdaten di, ds einsetzt.

Fig. 4 zeigt eine beispielhafte Videodaten-Verarbeitungsvorrichtung zum Empfangen eines solchen Ausgangsdatenstroms vo, wobei eine solche als beispielsweise Receiver ausgebildete Videodaten-Verarbeitungsvorrichtung RX im Wesentlichen vergleichbare Komponenten wie die Vorrichtungen gemäß Fig. 2 und 2 aufweisen kann. Jedoch werden eingangsseitig an einem Eingang 1° Daten des Ausgangsdatenstroms vo empfangen und einer Verarbeitungseinrichtung 1° angelegt. Unter Steuerung einer Steuereinrichtung C° analysiert die Verarbeitungseinrichtung 1° die empfangenen Daten des Ausgangsdatenstroms vo auf enthaltene Videodaten, Audiodaten und zusätzliche Daten, insbesondere zusätzliche Interrupt- und/oder Statusdaten di, ds. Gegebenenfalls vorverarbeitete Daten vo° werden dann einer Datentrennungseinrichtung 2° zugeführt, welche eine Trennung in Videodaten vi° und gegebenenfalls Audiodaten einerseits und Interrupt- und/oder Statusdaten di, ds andererseits vornimmt. Optional kann auch eine Weiterverarbeitung der Daten zur Wiedergabe auf einem Bildschirm und/oder zur Ausgabe an nachgeschaltete Verarbeitungsvorrichtungen über einen Ausgang O° vorgesehen sein.

Letztendlich sind weitere Modifikationen der verschiedenen Videodaten-Verarbeitungsvorrichtungen TX, TX°, RX möglich, insbesondere Modifikationen durch Integration verschiedener Funktionen in einem einzelnen Bauelement oder eine weitere Aufspaltung auf noch mehr Komponenten.

Verfahrensgemäß werden somit in eine Abfolge von digitalen Videodaten und gegebenenfalls Audiodaten Interrupt- und/oder Statusdaten als zusätzliche Daten eingebettet und gemeinsam in einem einzigen Ausgangsdatenstrom für eine weitere Videodaten-Verarbeitungsvorrichtung bereitgestellt.

## Patentansprüche

1. Videodaten-Verarbeitungsvorrichtung (TX; TX°) mit
- einem Eingang (I) zum Eingeben von Videodaten (vi),
- einer Verarbeitungseinrichtung (1) zum Verarbeiten zumindest der eingegebenen Videodaten (vi),
- einem Ausgang (O) zum Ausgeben von verarbeiteten, digitalen Videodaten (vi) an einen Videoempfänger (14) und
- einer Steuerschnittstelle (CIF) in der Verarbeitungseinrichtung (1) für Leseaufforderung des Videoempfängers (14),
wobei
- die Verarbeitungseinrichtung (1) und/oder eine Dateneinfügeeinrichtung (3) ausgebildet sind, in die Videodaten (vi) Interrupt- und/oder Statusdaten (s) einzusetzen oder einzuarbeiten und
- der Ausgang (O) die verarbeiteten, digitalen Videodaten (vi) mit den darin eingesetzten oder eingearbeiteten Interrupt- und/oder Statusdaten (s) nach erfolgter Leseaufforderung als die verarbeiteten Videodaten in einem digitalen Ausgangsdatenstrom (vo) für den Videoempfänger (14) bereitstellt.

2. Vorrichtung nach Anspruch 1, bei der die Verarbeitungseinrichtung (1) und/oder die Dateneinfügeeinrichtung (3) ausgebildet sind, die Interrupt- und/oder Statusdaten (s) als eigenständige Daten zwischen die eigentlichen digitalen Videodaten (vi) einzusetzen oder einzuarbeiten.

3. Vorrichtung nach Anspruch 1 oder 2, bei der die Verarbeitungseinrichtung (1) und/oder die Dateneinfügeeinrichtung (3) ausgebildet sind, die Interrupt- und/oder Statusdaten (s) als eigenständige Daten in für die eigentlichen digitalen Videodaten (vi) ungenutzte Datenstrombereiche einzusetzen oder einzuarbeiten.

4. Vorrichtung nach Anspruch 3, bei der die Verarbeitungseinrichtung (1) und/oder die Dateneinfügeeinrichtung (3) ausgebildet sind, die Interrupt- und/oder Statusdaten (s) in einen Video-blanking-Bereich einzusetzen oder einzuarbeiten.

5. Vorrichtung nach einem vorstehenden Anspruch, bei der die Verarbeitungseinrichtung (1) und/oder die Dateneinfügeeinrichtung (3) ausgebildet sind, die Interrupt- und/oder Statusdaten (s) in einem markierten Bereich des Ausgangsdatenstroms (vo) einzusetzen oder einzuarbeiten.

6. Vorrichtung nach einem vorstehenden Anspruch, bei der die Verarbeitungseinrichtung (1) und/oder die Dateneinfügeeinrichtung (3) ausgebildet sind, die Interrupt- und/oder Statusdaten (s) als solche und/oder deren Position in einem Kopfabschnitt des Ausgangsdatenstroms (vo) einzusetzen oder anzukündigen.

7. Vorrichtung nach einem vorstehenden Anspruch, bei der die Verarbeitungseinrichtung (1) und/oder die Dateneinfügeeinrichtung (3) ausgebildet sind, die Interrupt- und/oder Statusdaten (di, ds) in einem fest vorgegeben Bereich des Ausgangsdatenstroms (vo) einzusetzen oder einzuarbeiten.

8. Verfahren zum Bereitstellen eines digitalen Videodatenstroms als ein Ausgangsdatenstrom (vo), bei dem
- Interrupt- und/oder Statusdaten (s) zusätzlich zu eingegebenen Videodaten (vi) an einem Ausgang (O) bereitgestellt werden,
wobei
- die Interrupt- und/oder Statusdaten (s) in die eingegebenen Videodaten (vi) nach erfolgter Leseaufforderung eines Videoempfänger (14) eingesetzt oder eingearbeitet werden und
- am Ausgang (O) als Ausgangsdatenstrom (vo) die eingegebenen Videodaten (vi) mit den darin eingesetzten oder eingearbeiteten Interrupt- und/oder Statusdaten (di, ds) ausgegeben werden.

9. Verfahren nach Anspruch 8, bei dem die Interrupt- und/oder Statusdaten (di, ds) als eigenständige Daten zwischen die eigentlichen digitalen Videodaten (vi) eingesetzt oder eingearbeitet werden.

10. Verfahren nach Anspruch 8 oder 9, bei dem die Interrupt- und/oder Statusdaten (di, ds) als eigenständige Daten in für die eigentlichen digitalen Videodaten (vi) ungenutzte Datenstrombereiche eingesetzt oder eingearbeitet werden.

11. Verfahren nach Anspruch 10, bei dem die Interrupt- und/oder Statusdaten (di, ds) in einen Video-blanking-Bereich eingesetzt oder eingearbeitet werden.

12. Verfahren nach einem der Ansprüche 8 bis 11, bei dem die Interrupt- und/oder Statusdaten (di, ds) in einem markierten Bereich des Ausgangsdatenstroms (vo) eingesetzt oder eingearbeitet werden.

13. Verfahren nach einem der Ansprüche 8 bis 12, bei dem die Interrupt- und/oder Statusdaten (di, ds) in einem Kopfabschnitt des Ausgangsdatenstroms (vo) eingesetzt oder angekündigt werden.

14. Verfahren nach einem der Ansprüche 8 bis 13, bei dem die Interrupt- und/oder Statusdaten (di, ds) in einem fest vorgegeben Bereich des Ausgangsdatenstroms (vo) eingesetzt oder eingearbeitet werden.

15. Videodatenempfänger (RX) zum Empfangen eines Ausgangsdatenstroms (vo) einer Vorrichtung bzw. eines Verfahrens nach einem der vorstehenden Ansprüche mit
- einem Eingang (I°) zum Eingeben der Videodaten (vi°) mit den darin eingesetzten oder eingearbeiteten Interrupt- und/oder Statusdaten (di, ds),
- einer Verarbeitungseinrichtung (1°) zum Trennen der Videodaten (vi°) von den darin eingesetzten oder eingearbeiteten Interrupt- und/oder Statusdaten (di, ds) und
- einem Ausgang (O°) zum Ausgeben der verarbeiteten Videodaten (vi°) oder
- der Verarbeitungseinrichtung (1°) oder einer weiteren Verarbeitungseinrichtung (2°) zum weiteren Verarbeiten der Videodaten (vi°).
